# EUROPEAN PATENT APPLICATION

(11) **EP 3 050 680 A1**
(43) Date of publication of application: **03.08.2016**
(21) Application number: 16152680.1
(22) Date of filing: 26.01.2016
(51) Int. Cl.: B25J 9/04, B25J 9/12, B25J 19/00

(54) **ROBOT**

(30) Priority: 29.01.2015 JP 2015015703
(71) Applicant: Kabushiki Kaisha Yaskawa Denki, Kitakyushu-shi, Fukuoka 806-0004 (JP)
(72) Inventor: SUEYOSHI, Satoshi, Kitakyushu-shi Fukuoka 806-0004 (JP); ITO, Masato, Kitakyushu-shi Fukuoka 806-0004 (JP); SANADA, Takashi, Kitakyushu-shi Fukuoka 806-0004 (JP); HANIYA, Kazuhiro, Kitakyushu-shi Fukuoka 806-0004 (JP)
(74) Representative: Viering, Jentschura & Partner mbB Patent- und Rechtsanwälte

(57) **Abstract**

A robot (1) includes a base (3), a first arm (7), a second arm (9), a first motor (M2), and a second motor (M3). The first arm (7) is disposed on the base (3) and swingable about a first axis. The second arm (9) is disposed on the first arm (7) and swingable about a second axis. The first motor (M2) moves the first arm (7) about the first axis. The second motor (M3) moves the second arm (9) about the second axis. The first (M2) and second motors (M3) each include a body (30) and a protrusion (70). The body (30) has an axial dimension in a direction along an output shaft of each motor and a perpendicular dimension in a direction approximately perpendicular to the output shaft. The axial dimension is smaller than the perpendicular dimension. The protrusion (70) protrudes from a surface of the body (30) in a direction along the output shaft and is disposed at a position displaced from the output shaft.

## Description

### BACKGROUND

### FIELD OF THE INVENTION

The present invention relates to a robot.

### DISCUSSION OF THE BACKGROUND

Japanese Unexamined Patent Application Publication No. 2003-200376 discloses an industrial robot that includes a base, a turnable portion, a lower arm, and an upper arm. The turnable portion turns about an S axis relative to the base. The lower arm swings about an L axis relative to the turnable portion. The upper arm swings about a U axis relative to the lower arm. The lower arm operates by a motor that is coaxial with the L axis, and the upper arm operates by a motor that is coaxial with the U axis.

The contents of Japanese Unexamined Patent Application Publication No. 2003-200376 are incorporated herein by reference in their entirety.

In operations involving robots, the arms of the robots frequently come close to workpieces. In particular, in highly dense work areas, it is highly possible for the arms to come close to the workpieces. In order to prevent the arms from coming close to (or into contact with) the workpiece, there is a need for minimizing the width dimensions of the arms.

It is an object of the present disclosure to provide a robot with arms of minimized width dimensions.

### SUMMARY

According to one aspect of the present disclosure, a robot includes a base, a first arm, a second arm, a first motor, and a second motor. The first arm is disposed on the base and swingable about a first axis parallel to an installation surface on which the base is installed. The second arm is disposed on the first arm and swingable about a second axis parallel to the first axis. The first motor is configured to move the first arm about the first axis relative to the base. The first motor includes a first body and a first protrusion. The first body has an axial dimension in a direction along an output shaft of the first motor and a perpendicular dimension in a direction approximately perpendicular to the output shaft of the first motor. The axial dimension is smaller than the perpendicular dimension. The first protrusion protrudes from a surface of the first body in a direction along the output shaft of the first motor and is disposed at a position displaced from the output shaft of the first motor. The second motor is configured to move the second arm about the second axis relative to the first arm. The second motor includes a second body and a second protrusion. The second body has an axial dimension in a direction along an output shaft of the second motor and a perpendicular dimension in a direction approximately perpendicular to the output shaft of the second motor. The axial dimension is smaller than the perpendicular dimension. The second protrusion protrudes from a surface of the second body in a direction along the output shaft of the second motor and is disposed at a position displaced from the output shaft of the second motor.

The present disclosure provides a robot with arms of minimized width dimensions.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a perspective view of a robot according to an embodiment;
FIG. 2 is a side view of the robot illustrated in FIG. 1;
FIG. 3 is a rear view of the robot illustrated in FIG. 1;
FIG. 4 illustrates the robot illustrated in FIG. 3 with some elements taken away;
FIG. 5 illustrates a positional relationship between a motor and a cable in relation to a movement of a first arm;
FIG. 6 illustrates a positional relationship between the motor and the cable in relation to a movement of the first arm;
FIG. 7 illustrates a positional relationship between the motor and the cable in relation to a movement of the first arm;
FIG. 8 illustrates a positional relationship between a motor and the cable in relation to a movement of a second arm;
FIG. 9 illustrates a positional relationship between the motor and the cable in relation to a movement of the second arm;
FIG. 10 illustrates a positional relationship between the motor and the cable in relation to a movement of the second arm;
FIG. 11 is a perspective view of the motor illustrating an external appearance of the motor; and
FIG. 12 is a cross-sectional view of the motor.

### DESCRIPTION OF THE EMBODIMENTS

The embodiments will now be described with reference to the accompanying drawings, wherein like reference numerals designate corresponding or identical elements throughout the various drawings.

### Configuration of Robot

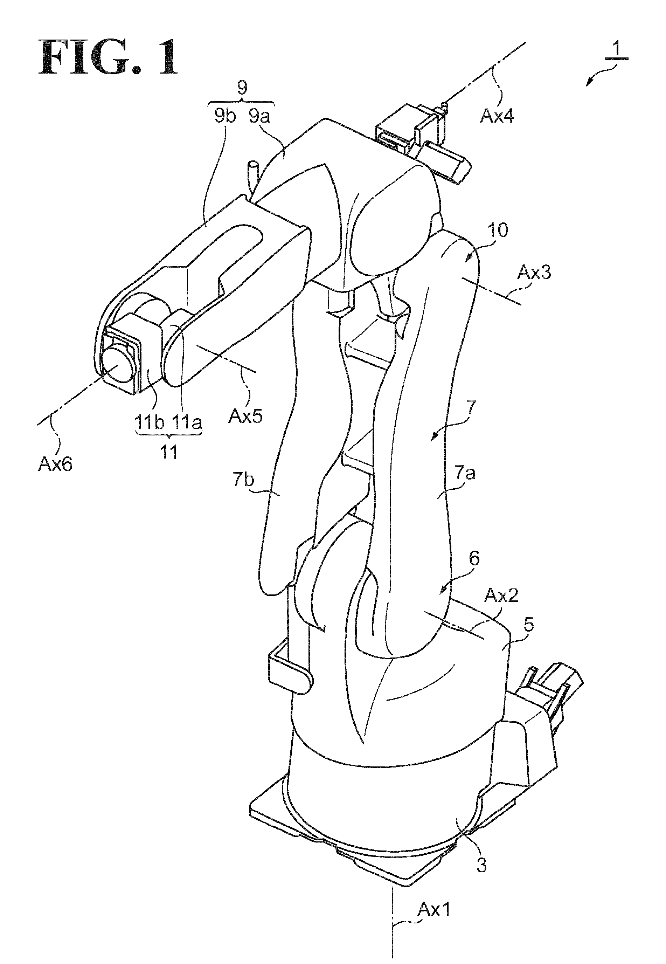

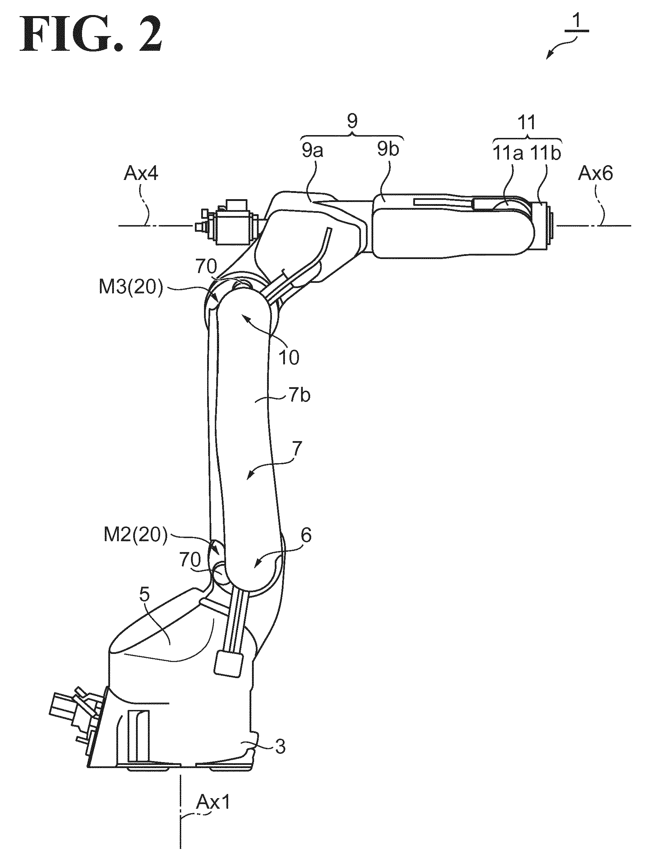

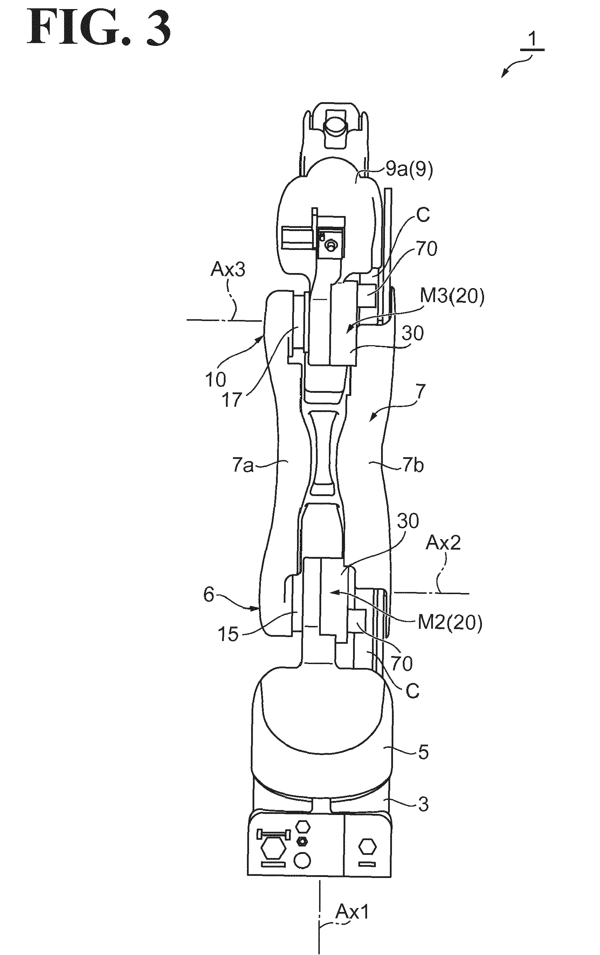

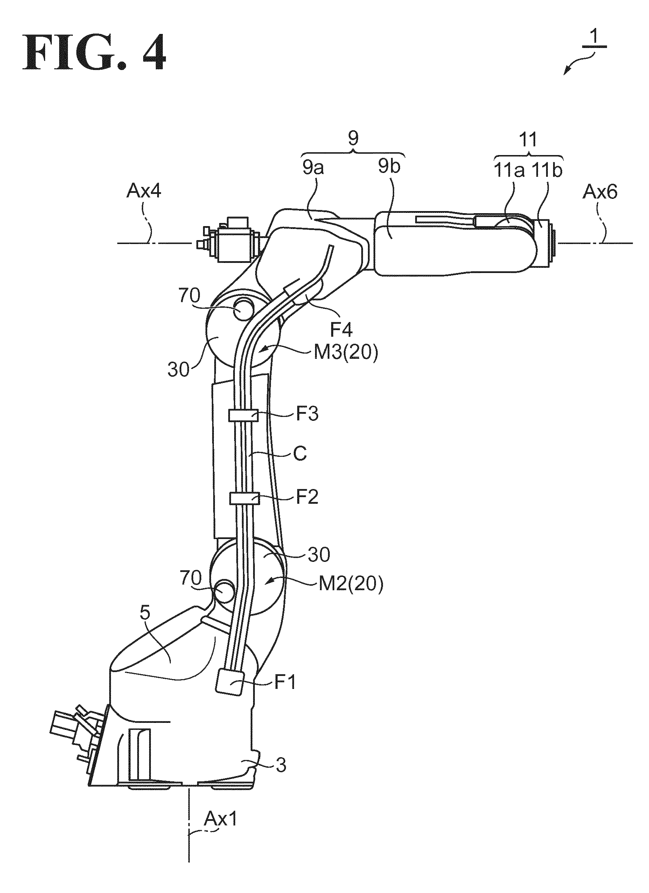

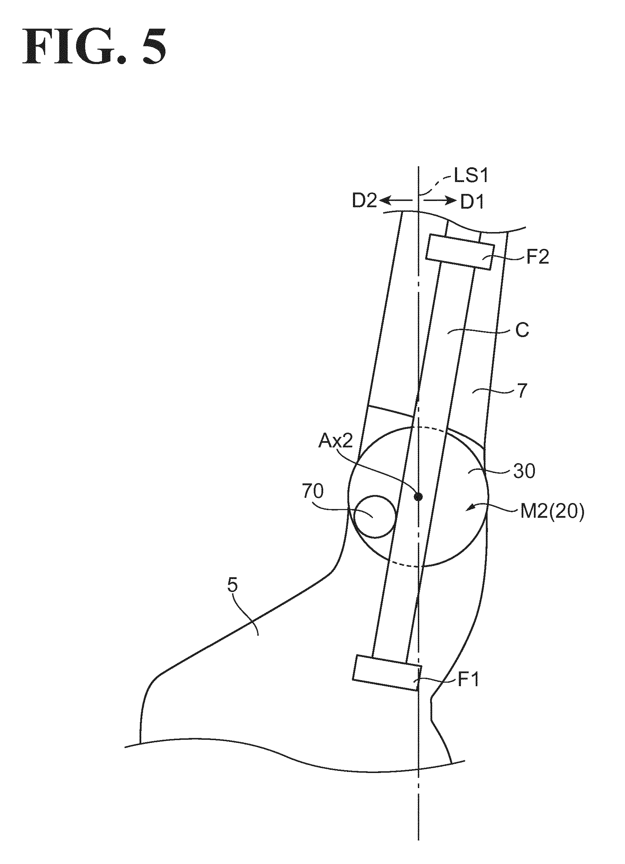

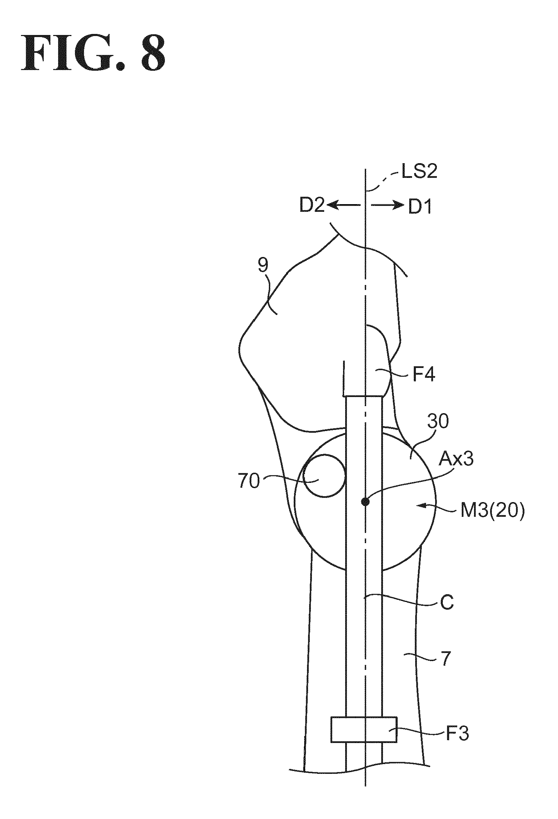

FIG. 1 is a perspective view of a robot according to this embodiment on which a motor is mountable. FIG. 2 is a side view of the robot illustrated in FIG. 1. FIG. 3 is a rear view of the robot illustrated in FIG. 1. FIG. 4 illustrates the robot illustrated in FIG. 3 with some elements taken away. FIGs. 5 to 7 illustrate positional relationships between a motor and a cable in relation to movements of a first arm. FIGs. 8 to 10 illustrate positional relationships between a motor and the cable in relation to movements of a second arm. The robot, 1, illustrated in the drawings is an industrial robot that works on workpieces, not illustrated.

As illustrated in FIGs. 1 to 4, the robot 1 includes a base 3, a turnable portion 5, a first arm (first arm) 7, a second arm (second arm) 9, and an end base 11. The base 3, the turnable portion (base) 5, the first arm 7, the second arm 9, and the end base 11 are coupled to each other in this order from the base end of the robot 1 to the distal end of the robot 1. The robot 1 is supplied power and other sources of energy for the robot 1's electrical components through a cable C.

The base 3 is fixed to an installation surface and supports the entire robot 1.

The turnable portion 5 is disposed on the base 3. The turnable portion 5 is turnable about a turning axis, namely, a first axis Ax1, which extends in the vertical direction, relative to the base 3. The turnable portion 5 is driven into turning operation about the first axis Ax1 by a power source, namely, a first motor (not illustrated), which is accommodated in the turnable portion 5. The first axis Ax1 will be occasionally referred to as "S axis".

The first arm 7 is swingable about a swing axis, namely, a second axis Ax2 (corresponding to the first axis recited in the appended claims) relative to the turnable portion 5. The second axis Ax2 passes through a connection portion 6 (the end of the first arm 7 on the side of the turnable portion 5), at which the turnable portion 5 and the first arm 7 are coupled to each other. The first arm 7 includes a first arm member 7a and a second arm member 7b. The first arm member 7a and the second arm member 7b extend and face each other at a predetermined distance in a direction along the second axis Ax2. The connection portion 6, at which the turnable portion 5 and the first arm 7 are coupled to each other, is equipped with a second motor (corresponding to the first motor recited in the appended claims) M2 (20).

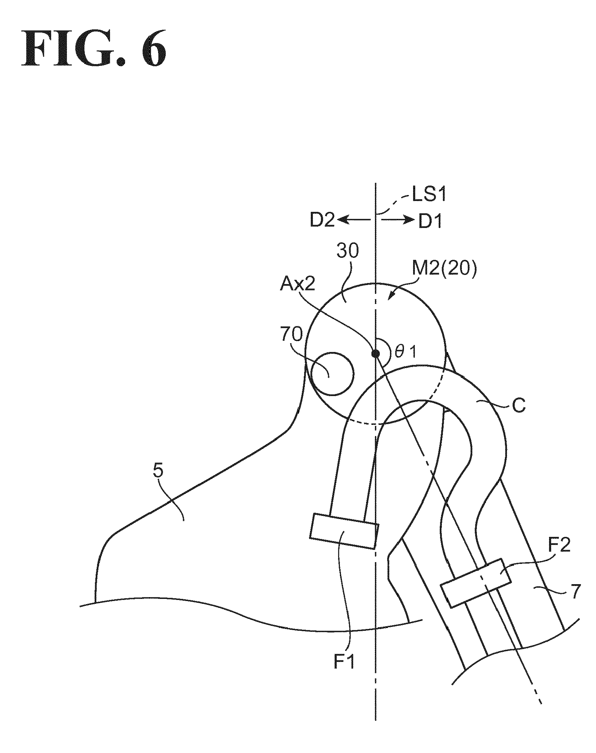

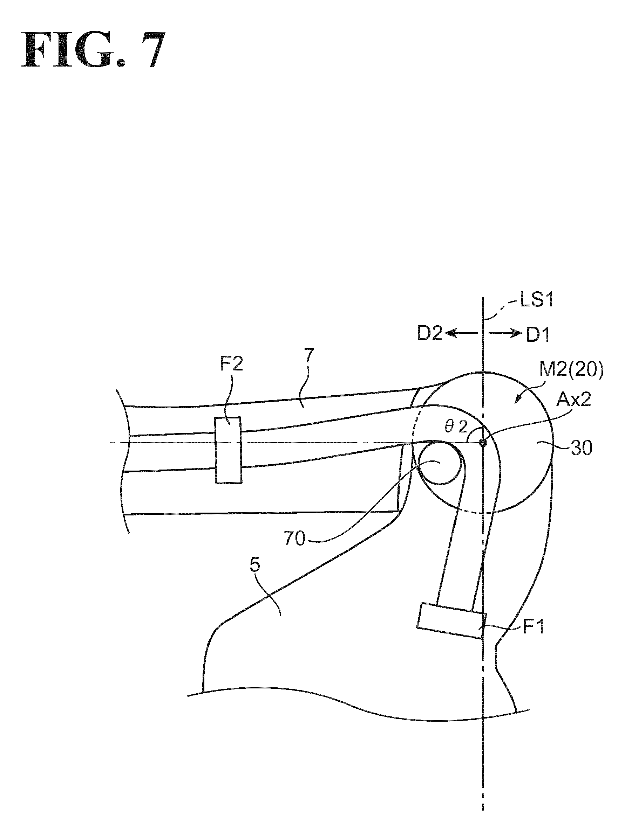

The first arm 7 is driven by a power source, namely, the second motor M2, into swing operation about the second axis Ax2. Specifically, as illustrated in FIG. 6, the first arm 7 is swingable in a first direction *D1* (frontward) up to a first swing angle *θ1* relative to a first reference line LS 1. The first reference line LS 1 is in a direction approximately perpendicular to the installation surface and passes through the second axis Ax2. As illustrated in FIG. 7, the first arm 7 is also swingable relative to the first reference line LS1 in a second direction *D2* (rearward), which is opposite to the first direction *D1,* up to a second swing angle *θ2*. The second swing angle *θ2* is smaller than the first swing angle *θ1 θ1* > *θ2*). The second axis Ax2 will be occasionally referred to as "L axis".

The second arm 9 includes a base end 9a and a distal end 9b. The base end 9a is on the side of the first arm 7, and the distal end 9b is on the side of the end base 11. The base end 9a is swingable about a swing axis, namely, a third axis Ax3 (corresponding to the second axis recited in the appended claims) relative to the first arm 7. The third axis Ax3 passes through a connection portion 10 (the end of the first arm 7 on the side of the base end 9a), at which the first arm 7 and the second arm 9 are coupled to each other. This configuration makes the second arm 9 as a whole swingable about the third axis Ax3 relative to the first arm 7. The connection portion 10, at which the first arm 7 and the second arm 9 are coupled to each other, is equipped with a third motor (the second motor recited in the appended claims) M3 (20).

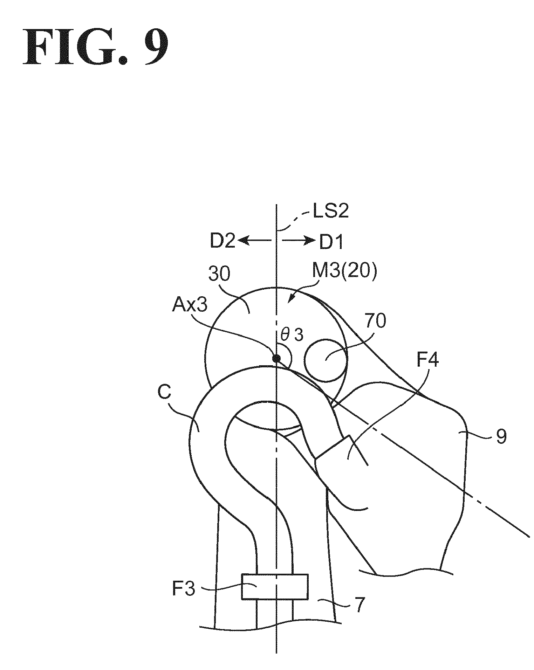

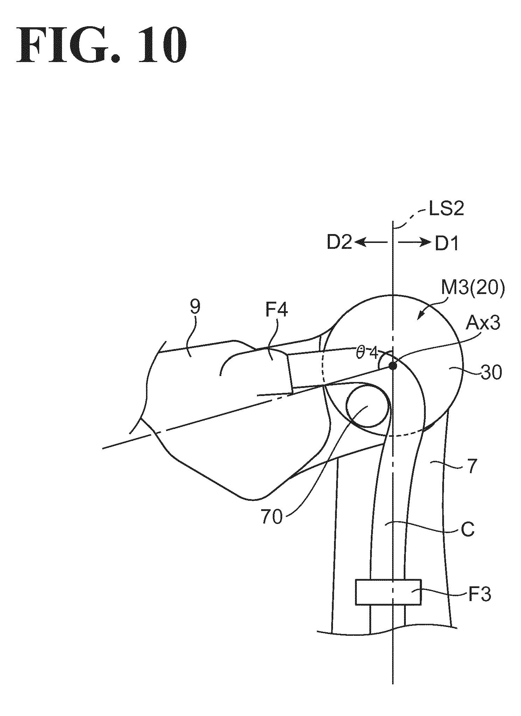

The second arm 9 (base end 9a) is driven by a power source, namely, the third motor M3, into swing operation about the third axis Ax3. As illustrated in FIG. 9, the second arm 9 is swingable in the first direction *D1* up to a first swing angle *θ3* relative to a second reference line LS2. The second reference line LS2 is in the direction approximately perpendicular to the installation surface and passes through the third axis Ax3. As illustrated in FIG. 10, the second arm 9 is also swingable relative to the second reference line LS2 in the second direction *D2,* which is opposite to the first direction *D1,* up to a second swing angle *θ4*. The second swing angle *θ4* is smaller than the first swing angle *θ3*. The third axis Ax3 extends in parallel to the second axis Ax2. The third axis Ax3 will be occasionally referred to as "U axis".

The distal end 9b is turnable about a turning axis, namely, a fourth axis Ax4, relative to the base end 9a. The fourth axis Ax4 passes through the center of the second arm 9. The distal end 9b is driven by a power source, namely, a fourth motor, into turning operation about the fourth axis Ax4. The fourth axis Ax4 will be occasionally referred to as "R axis".

The end base 11 includes a base end 11a and a distal end 11b. The base end 11a is on the side of the second arm 9, and the distal end 11b is on the side of the distal end of the robot 1. The base end 11a is swingable about a swing axis, namely, a fifth axis Ax5 relative to the distal end 9b. The fifth axis Ax5 passes through a connection portion at which the second arm 9 (distal end 9b) and the end base 11 (base end 11a) are coupled to each other. The base end 11a is driven by a power source, namely, a fifth motor, into swing movement about the fifth axis Ax5. The fifth axis Ax5 will be occasionally referred to as "B axis".

The distal end 11b is mounted on the base end 11a in a rotatable manner about a rotation axis, namely, a sixth axis Ax6, relative to the base end 11a. The sixth axis Ax6 passes through the center of the end base 11. The distal end 11b is driven by a power source, namely, a sixth motor, into rotational movement about the sixth axis Ax6. The sixth axis Ax6 will be occasionally referred to as "T axis". An end effector is attachable to the end base 11. A non-limiting example of the end effector is a welding torch.

### Configurations of Motors

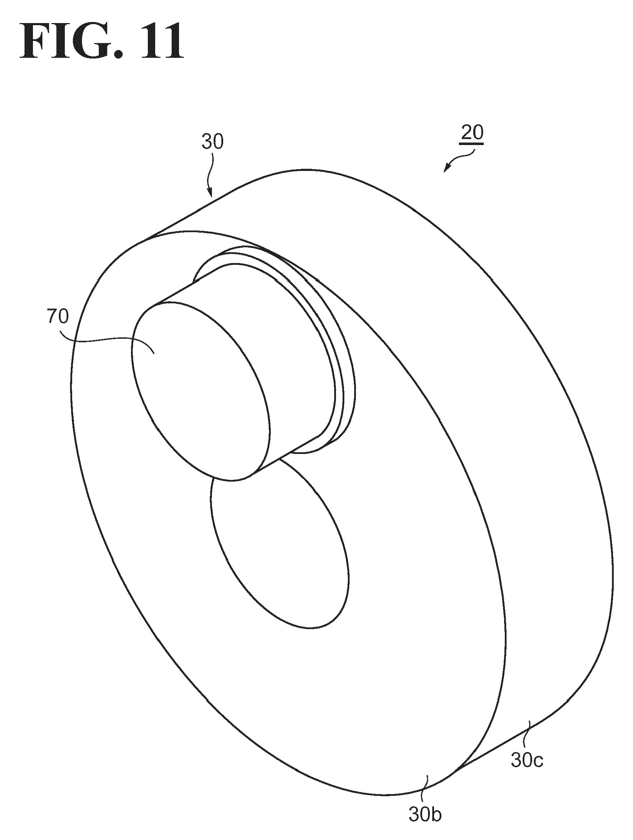

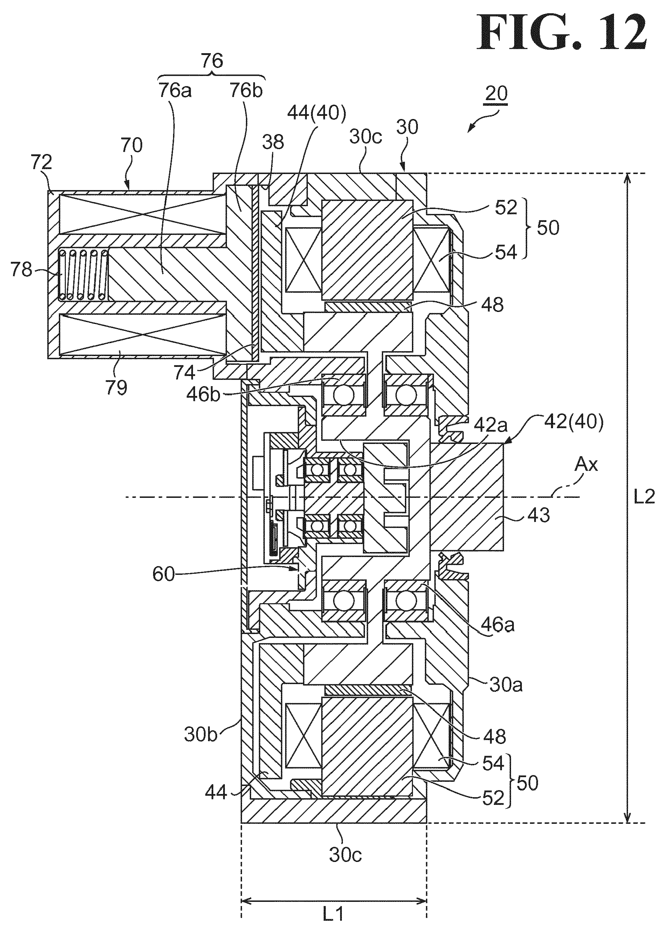

Next, the first to sixth motors provided in the robot 1 will be described in detail. The first to sixth motors have similar configurations and may hereinafter occasionally be referred to as "motor 20" collectively. FIG. 11 is a perspective view of the motor illustrating an external appearance of the motor 20. FIG. 12 is a cross-sectional view of the motor 20. As illustrated in FIGs. 11 and 12, the motor 20 (M2, M3) includes a casing (body) 30, a rotor 40, a stator 50, an encoder 60, and a brake (protrusion) 70.

The casing 30 holds elements such as the rotor 40, the stator 50, and the encoder 60. In this embodiment, the casing 30 has a circular outer shape. The casing 30 includes a first surface 30a, a second surface (a surface) 30b, and a third surface 30c. The first surface 30a and the second surface 30b are orthogonal to the output shaft, Ax, of the motor 20. The third surface 30c has a circular shape extending along the output shaft Ax. The casing 30 has an axial dimension in a direction along the output shaft Ax of the motor 20 and a perpendicular dimension in direction approximately perpendicular to the output shaft Ax. The axial dimension is smaller than the perpendicular dimension. Specifically, the casing 30 has such a flat shape that dimension *L1*, which is between the first surface 30a and the second surface 30b, is smaller than dimension *L2,* which is the diameter of the third surface 30c (*L1 < L2).* In this embodiment, the dimension *L1* is equal to or less than half the dimension *L2.*

The rotor 40 includes a rotator 42 and a brake pad 44. The rotator 42 is a member that can be driven into rotation about the output shaft Ax. The rotator 42 is rotatable by ring-shaped bearings 46a and 46b, which are fixed to the casing 30. The bearings 46a and 46b are aligned in a direction along the output shaft Ax with a predetermined distance between the bearings 46a and 46b. On the outer surface of the rotor 40, magnets 48 are aligned in the circumferential direction. The rotator 42 includes a shaft member 43. The shaft member 43 protrudes from the first surface 30a of the casing 30.

The brake pad 44 is a member that performs braking operation as controlled by the brake 70. The brake pad 44 is disposed over the circumference of the rotator 42. The brake pad 44 has a ring shape. The brake pad 44 is coaxial with the output shaft Ax. The outer edge of the brake pad 44 is further outward than the outer edge of the rotator 42. That is, the outer diameter of the brake pad 44 is larger than the outer diameter of the rotator 42. In this embodiment, the brake pad 44 is made of metal.

The stator 50 is a member that imparts rotational force to the rotor 40. The stator 50 includes a core 52 and a coil 54. In this embodiment, the core 52 has a ring shape. The core 52 faces the outer surface of the rotator 42. The coil 54 is disposed on the core 52.

The encoder 60 is a rotation detector that detects the rotation of the rotor 40. A non-limiting example of the encoder 60 is a rotary encoder capable of detecting amounts by which the motor 20 is driven, such as the number of rotations of the rotor 40, the rotational angle of the rotor 40, and/or the rotational speed of the rotor 40. The encoder 60 is partially disposed in a depression 42a of the rotator 42.

The brake 70 is a braking device that causes the rotating rotor 40 to brake. The brake 70 protrudes outward from the second surface 30b of the casing 30 along the output shaft Ax. The brake 70 is decentered from the output shaft Ax. The brake 7 includes a case 72, a friction material 74, a holding member 76, a biasing member 78, and a coil 79.

The case 72 accommodates the holding member 76, the biasing member 78, and the coil 79. In this embodiment, the case 72 is fixed to the casing 30 with a screw. In the embodiment illustrated in FIG. 11, the case 72 has a solid cylindrical outer shape. The case 72 may be designed into any convenient shape.

The friction material 74 comes into sliding contact with the brake pad 44 of the rotor 40 to impart frictional force to the brake pad 44. The friction material 74 is disposed on the holding member 76. Examples of the material of the friction material 74 include, but are not limited to, resin mold, semi-metallic material, and sintered alloy (of iron and/or copper).

The holding member 76 holds the friction material 74. In this embodiment, the holding member 76 is made of metal. The holding member 76 has an approximately T shape. The holding member 76 includes a body 76a and a holder 76b.

In this embodiment, the body 76a has a solid cylindrical shape. The body 76a extends in the direction along the output shaft Ax. In this embodiment, the holder 76b has a disc shape. The holder 76b is disposed on one end (the end closer to the brake pad 44) of the body 76a. The outer diameter of the holder 76b is larger than the outer diameter of the body 76a. The holder 76b faces the brake pad 44 of the rotor 40. That is, the friction material 74 faces the brake pad 44.

The holding member 76 is movable (sliding-movable) in the direction along the output shaft Ax. Specifically, the holding member 76 is movable between a first position (initial position) and a second position. At the first position, the holder 76b contacts the coil 79. At the second position, the friction material 74 sliding-contacts the brake pad 44.

The biasing member 78 biases the holding member 76. In this embodiment, the biasing member 78 is a coil spring. The biasing member 78 is disposed on the other end of the body 76a of the holding member 76. When the holding member 76 is at the first position, the biasing member 78 biases the holding member 76 toward the rotor 40.

The coil 79 regulates the movement of the holding member 76. The coil 79 surrounds the body 76a of the holding member 76. When current is supplied through the coil 79, the coil 79 effects electromagnetic force against the biasing force of the biasing member 78 to pull the holder 76b and holds the holding member 76 at the first position. When no current is supplied through the coil 79, the coil 79 releases the holding member 76.

When supply of current through the coil 79 is discontinued, the brake 70 with the above-described configuration causes the coil 79 to release the holding member 76, and allows the biasing force of the biasing member 78 to move the holding member 76 toward the rotor 40. That is, the brake 70 positions the holding member 76 at the second position. Then, the brake 70 causes the friction material 74 to sliding-contact the brake pad 44 to impart frictional force to the brake pad 44. This configuration causes the rotating rotor 40 to decelerate or stop and prevents the stationary rotor 40 from rotating.

When current is supplied through the coil 79, the brake 70 causes the coil 79 to pull the holding member 76 to separate the friction material 74 and the brake pad 44 from each other. That is, the brake 70 positions the holding member 76 at the first position. This configuration makes the rotor 40 rotatable.

### Motor Arrangement

Next, arrangement of the motor 20 (second motor M2, third motor M3) with the above-described configuration will be described. The second motor M2 is disposed at the connection portion 6, at which the turnable portion 5 and the first arm 7 are coupled to each other. The second motor M2 is disposed on the second arm member 7b of the first arm 7 and is fixed to the turnable portion 5. Specifically, the second motor M2 is fixed to the turnable portion 5 with the output shaft Ax coaxial with the second axis Ax2.

The second motor M2 is coupled to a reducer (first reducer) 15. The reducer 15 is disposed on the first arm member 7a of the first arm 7. The input shaft of the reducer 15 is coaxial with the output shaft Ax of the second motor M2. That is, the output shaft Ax of the second motor M2 and the input shaft of the reducer 15 are coaxial with the second axis Ax2.

With the second motor M2 fixed to the turnable portion 5, the brake 70 of the second motor M2 is at a particular position. Specifically, as illustrated in FIG. 3, the brake 70 of the second motor M2 protrudes outward in the direction along the second axis Ax2. As illustrated in FIGs. 5 to 7, in a view from the direction along the second axis Ax2, the brake 70 of the second motor M2 is disposed at a position that is lower than the second axis Ax2 in the direction toward the installation surface and that is further in the second direction D2 than the first reference line LS 1.

In a view from the direction along the second axis Ax2, the cable C overlaps the casing 30 of the second motor M2 with the second surface 30b of the casing 30 in contact with or abutting on the cable C. Thus, as illustrated in FIG. 3, the second motor M2 is disposed between the reducer 15 and the cable C in the direction along the second axis Ax2. The cable C is fixed to the turnable portion 5 with a fixture F1 and fixed to the first arm 7 with a fixture F2. The fixture F1 and the fixture F2 are disposed across the second motor M2. Specifically, the fixture F1 is at a position lower than the second motor M2 in the direction toward the base end of the robot 1. The fixture F2 is at a position higher than the second motor M2 in the direction toward the distal end of the robot 1. The fixture F1 keeps the cable C fixed to the turnable portion 5, and the fixture F2 keeps the cable C fixed to the first arm 7.

The third motor M3 is disposed at the connection portion 10, at which the first arm 7 and the second arm 9 are coupled to each other. The third motor M3 is fixed to the second arm 9. Specifically, the output shaft Ax of the third motor M3 is coaxial with the third axis Ax3.

The third motor M3 is coupled to a reducer (second reducer) 17. The reducer 17 is disposed on the side of the first arm member 7a of the first arm 7. The input shaft of the reducer 17 is coaxial with the output shaft Ax of the third motor M3. Specifically, the output shaft Ax of the third motor M3 and the input shaft of the reducer 17 are coaxial with the third axis Ax3.

With the third motor M3 fixed to the second arm 9, the brake 70 of the third motor M3 is at a particular position. Specifically, as illustrated in FIG. 3, the brake 70 of the third motor M3 protrudes outward in the direction along the third axis Ax3. While the second arm 9 is not swinging relative to the second reference line LS2 (that is, when the second arm 9 is in the state illustrated in FIG. 4), the brake 70 of the third motor M3 is at a position that is further away from the second axis Ax2 than the third axis Ax3 is from the second axis Ax2 in a view from the direction along the third axis Ax3.

In a view from the direction along the third axis Ax3, the cable C overlaps the casing 30 of the third motor M3 with the second surface 30b of the casing 30 in contact with or abutting on the cable C. Thus, as illustrated in FIG. 3, the third motor M3 is disposed between the reducer 17 and the cable C in the direction along the third axis Ax3. The cable C is fixed to the first arm 75 with a fixture F3 and fixed to the second arm 9 with a fixture F4. The fixture F3 and the fixture F4 are disposed across the third motor M3. Specifically, the fixture F3 is at a position lower than the third motor M3 in the direction toward the base end of the robot 1. The fixture F4 is at a position higher than the third motor M3 in the direction toward the distal end of the robot 1. The fixture F3 keeps the cable C fixed to the first arm 7, and the fixture F4 keeps the cable C fixed to the second arm 9.

### Advantageous Effects

As has been described hereinbefore, in the robot 1 according to this embodiment, the casing 30 of the motor 20 has a smaller axial dimension, which is in the direction along the output shaft Ax, than the perpendicular dimension of the casing 30 in the direction approximately perpendicular to the output shaft Ax. That is, the casing 30 has a flat shape. Thus, the casing 30 is flat and the motor 20 is disposed with its output shaft Ax parallel to the swing axis. This configuration decreases the dimension of the motor 20 in the width direction (*L1*).

Here, motors used in conventional robots have larger dimensions in the axial direction because the motor section and the brake section are coaxial with each other. If such motor is used in a robot, it is necessary to circumvent the motor in the work of wiring the cable along the arm to the motor and other elements. That is, the cable is wired along the side of the arm opposite to the side on which the motor is disposed. This configuration involves addition of the width dimension of the motor and the width dimension of cable to the width dimension of the arm. As a result, the width dimension of the arm as a whole increases.

The brake 70 of the motor 20 according to this embodiment protrudes from the second surface 30b of the casing 30 in the direction along the output shaft Ax, and is disposed at a position displaced from the output shaft Ax. With this configuration, a space as minimal as possible and necessary to install the motor 20 has a space for the brake 70 and a space without the brake 70. The space without the brake 70 can be utilized as a space for wiring the cable C. The space for wiring the cable C enables the cable C to be wired on the side of the arm on which the motor 20 is disposed. This configuration minimizes the width dimensions of the first arm 7 and the second arm 9.

In this embodiment, the cable C overlaps the casing 30 of the second motor M2 in a view from the direction along the second axis Ax2, and overlaps the casing 30 of the third motor M3 in a view from the direction along the third axis Ax3. Here, the second surface 30b of the casing 30 is in contact with or abuts on the cable C. This configuration ensures that as illustrated in FIG. 4, the cable C passes through spaces in the motors M2 and M3 where the brakes 70 are not disposed.

In this embodiment, the robot 1 includes the reducer 15 and the reducer 17. The reducer 15 is coupled to the second motor M2 and has an input shaft coaxial with the output shaft Ax. The reducer 17 is coupled to the third motor M3 and has an input shaft coaxial with the output shaft Ax. The second motor M2 is disposed between the reducer 15 and the cable C in the direction along the second axis Ax2. The third motor M3 is disposed between the reducer 17 and the cable C in the direction along the third axis Ax3. Thus, the motors M2 and M3 are disposed between the cable C and the respective reducers 15 and 17 in the respective axial directions. This configuration decreases the width dimensions of the first arm 7 and the second arm 9 even though the reducers 15 and 17 are coaxial with the motor 20.

In this embodiment, the second motor M2 is fixed to the turnable portion 5. Since the second motor M2 is fixed to the turnable portion 5, the second motor M2 itself does not turn relative to the turnable portion 5. Specifically, the second motor M2 is fixed with the brake 70 positioned to prevent the first arm 7 from taking an abnormal posture (such as involving forcible stretch of the cable C) when the first arm 7 swings and the cable C contacts the brake 70. This configuration eliminates or minimizes excessive contact between the cable C and the brake 70, and eliminates or minimizes resulting degradation, damage, and other similar occurrences to the cable C. The third motor M3 is fixed to the second arm 9. Since the third motor M3 is fixed to the second arm 9, the third motor M3 turns together with the second arm 9. Specifically, the third motor M3 is fixed with the brake 70 positioned to prevent the second arm 9 from taking an abnormal posture when the second arm 9 swings and the cable C contacts the brake 70.

In this embodiment, the output shaft Ax of the second motor M2 and the second axis Ax2 are coaxial with each other. The first arm 7 is swingable in the first direction *D1* up to the first swing angle *θ1* relative to the first reference line LS1, which is in the direction approximately perpendicular to the installation surface and which passes through the second axis Ax2. The first arm 7 is also swingable relative to the first reference line LS1 in the second direction *D2,* which is opposite to the first direction *D1,* up to the second swing angle *θ2*, which is smaller than the first swing angle *θ1*. In a view from the direction along the second axis Ax2, the brake 70 of the second motor M2 is disposed at a position that is lower than the second axis Ax2 in the direction toward the installation surface and that is further in the second direction *D2* than the first reference line LS 1.

This configuration ensures that as illustrated in FIG. 5, the cable C passes through the center of the casing 30 of the second motor M2 while the first arm 7 is not swinging. This eliminates the need for bending the cable C, and eliminates or minimizes load on the cable C. As illustrated in FIG. 6, when the first arm 7 swings by the first swing angle *θ1* in the first direction *D1,* the cable C is bent without contacting the brake 70. As illustrated in FIG. 7, when the first arm 7 swings by the second swing angle *θ2* in the second direction *D2,* the cable C is curved on the brake 70 without taking an abnormal posture. This configuration eliminates or minimizes excessive load on the cable C, and eliminates or minimizes resulting degradation, damage, and other similar occurrences to the cable C.

In this embodiment, the output shaft Ax of the third motor M3 and the third axis Ax3 are coaxial with each other. The second arm 9 is swingable in the first direction *D1* up to the first swing angle *θ3* relative to the second reference line LS2, which is in the direction approximately perpendicular to the installation surface and which passes through the third axis Ax3. The second arm 9 is also swingable relative to the second reference line LS2 in the second direction *D2,* which is opposite to the first direction *D1,* up to the second swing angle *θ4*, which is smaller than the first swing angle *θ3*. While the second arm 9 is not swinging relative to the second reference line LS2, the brake 70 of the third motor M3 is at a position that is further away from the second axis Ax2 than the third axis Ax3 is from the second axis Ax2 in a view from the direction along the third axis Ax3.

This configuration ensures that as illustrated in FIG. 4, the cable C is not bent on the brake 70 while the second arm 9 is not swinging. This configuration eliminates or minimizes load on the cable C. As illustrated in FIG. 8, when the second arm 9 swings in the second direction *D2*, facing upward, the cable C is stretched out, with no or minimal bending. As illustrated in FIG. 9, when the second arm 9 swings by the first swing angle *θ3* in the first direction *D1,* the cable C is bent without contacting the brake 70. As illustrated in FIG. 10, when the second arm 9 swings by the second swing angle *θ4* in the second direction *D2*, the cable C is curved on the brake 70 without an abnormal posture. This configuration eliminates or minimizes excessive load on the cable C, and eliminates or minimizes resulting degradation, damage, and other similar occurrences to the cable C.

In this embodiment, the cable C is fixed with the fixtures F1 to F4. The fixtures F1 and F2 are disposed across the second motor M2, and the fixtures F3 and F4 are disposed across the third motor M3. Arranging the fixtures F1 to F4 in this manner prevents the cable C from coming loose due to the swing of the first arm 7 and the second arm 9. Preventing the cable C from coming loose eliminates or minimizes contact between the cable C and workpieces. It is noted that this arrangement of the fixtures F1 to F4 is not essential. Another possible embodiment is to omit the fixtures F2 and F3 and arrange the fixture F1 and the fixture F4 across the second motor M2 and the third motor M3. It is also noted that the fixtures may not necessarily fix the cable C completely, but may be turnable metal fittings, turnable cable guides, or any other turnable fixtures.

The above-described embodiment should not be construed in a limiting sense. For example, while the above-described embodiment has been described as including the first arm 7 and the second arm 9, an additional arm may be coupled to the second arm 9.

While in the above-described embodiment the motor 20 has been described as having the configuration illustrated in FIG. 12, this configuration of the motor 20 should not be construed in a limiting sense.
- 1 ...: Robot
- 7 ...: First arm (first arm)
- 7a ...: First arm member
- 7b ...: Second arm member
- 9 ...: Second arm (second arm)
- 15 ...: Reducer (first reducer)
- 17 ...: Reducer (second reducer)
- 20, M2 ...: Second motor (first motor)
- 20, M3 ...: Third motor (second motor)
- 30 ...: Casing (body)
- 30b ...: Second surface (a surface)
- 70 ...: Brake (protrusion)
- Ax ...: Output shaft
- Ax2 ...: Second axis (first axis)
- Ax3 ...: Third axis (second axis)
- C ...: Cable
- *D1* ...: First direction
- *D2* ...: Second direction
- F1 to F4 ...: Fixture
- LS 1 ...: First reference line
- LS2 ...: Second reference line

## Claims

1. A robot (1), **characterized by**:
a base (3);
a first arm (7) disposed on the base (3) and swingable about a first axis parallel to an installation surface on which the base (3) is installed;
a second arm (9) disposed on the first arm (7) and swingable about a second axis parallel to the first axis;
a first motor (M2) configured to move the first arm (7) about the first axis relative to the base (3), the first motor (M2) comprising:
a first body (30) comprising an axial dimension in a direction along an output shaft of the first motor (M2) and a perpendicular dimension in a direction approximately perpendicular to the output shaft of the first motor (M2), the axial dimension being smaller than the perpendicular dimension; and
a first protrusion (70) protruding from a surface of the first body (30) in a direction along the output shaft of the first motor (M2) and disposed at a position displaced from the output shaft of the first motor (M2); and
a second motor (M3) configured to move the second arm (9) about the second axis relative to the first arm (7), the second motor (M3) comprising:
a second body (30) comprising an axial dimension in a direction along an output shaft of the second motor (M3) and a perpendicular dimension in a direction approximately perpendicular to the output shaft of the second motor (M3), the axial dimension being smaller than the perpendicular dimension; and
a second protrusion (70) protruding from a surface of the second body (30) in a direction along the output shaft of the second motor (M3) and disposed at a position displaced from the output shaft of the second motor (M3).

2. The robot (1) according to claim 1, further comprising a cable (C) extending between the first arm (7) and the second arm (9), wherein in a view from a direction along the first axis and the second axis, the cable (C) overlaps the first body (30) of the first motor (M2) and the second body (30) of the second motor (M3) with the surface of the first body (30) and the surface of the second body (30) in contact with or abutting on the cable (C).

3. The robot (1) according to claim 2, further comprising:
a first reducer (15) coupled to the first motor (M2) and comprising an input shaft coaxial with the output shaft of the first motor (M2), wherein the first motor (M2) is disposed between the first reducer (15) and the cable (C) in a direction along the first axis; and
a second reducer (17) coupled to the second motor (M3) and comprising an input shaft coaxial with the output shaft of the second motor (M3), wherein the second motor (M3) is disposed between the second reducer (17) and the cable (C) in a direction along the second axis.

4. The robot (1) according to claim 2 or 3,
wherein the first motor (M2) is fixed to the base (3), and
wherein the second motor (M3) is fixed to the second arm (9).

5. The robot (1) according to claim 4,
wherein the output shaft of the first motor (M2) and the first axis are coaxial with each other,
wherein the first arm (7) is swingable in a first direction up to a first swing angle relative to a first reference line that is in a direction approximately perpendicular to the installation surface and that passes through the first axis, and the first arm (7) is swingable relative to the first reference line in a second direction opposite to the first direction up to a second swing angle smaller than the first swing angle, and
wherein in a view from a direction along the first axis, the first protrusion (70) of the first motor (M2) is disposed at a position that is lower than the first axis in a direction toward the installation surface and that is further in the second direction than the first reference line.

6. The robot (1) according to claim 4,
wherein the output shaft of the second motor (M3) and the second axis are coaxial with each other,
wherein the second arm (9) is swingable in a first direction up to a first swing angle relative to a second reference line that is in a direction approximately perpendicular to the installation surface and that passes through the second axis, and the second arm (9) is swingable relative to the second reference line in a second direction opposite to the first direction up to a second swing angle smaller than the first swing angle, and
wherein while the second arm (9) is not swinging relative to the second reference line, the second protrusion (70) of the second arm (9) is at a position that is further away from the first axis than the second axis is from the first axis in a view from a direction along the second axis.

7. The robot (1) according to any one of claims 2 to 6, further comprising a plurality of fixtures (F1, F2, F3, F4) fixing the cable (C) with the first motor (M2) and the second motor (M3) positioned between the plurality of fixtures (F1, F2, F3, F4).

8. The robot (1) according to claim 7, wherein the first motor (M2) is positioned between two fixtures among the plurality of fixtures (F1, F2, F3, F4), and the second motor (M3) is positioned between another two fixtures among the plurality of fixtures (F1, F2, F3, F4).

9. The robot (1) according to any one of claims 1 to 8, wherein the first arm (7) comprises a pair of arm members (7a, 7b) extending and facing each other.
